# EUROPÄISCHE PATENTSCHRIFT

(11) **EP 3 561 474 B1**
(45) Veröffentlichungstag und Bekanntmachung des Hinweises auf die Patenterteilung: **30.12.2020**
(21) Anmeldenummer: 18169916.6
(22) Anmeldetag: 27.04.2018
(51) Int. Cl.: G01M 13/04, F16C 33/00, G01L 5/00, G01M 13/045

(54) **VERFAHREN ZUR BESTIMMUNG EINER BELASTUNG EINES LAGERS, COMPUTERPROGRAMMPRODUKT, STEUEREINRICHTUNG UND ANTRIEB**
METHOD FOR DETERMINING A LOAD ON A BEARING, COMPUTER PROGRAM PRODUCT, CONTROL DEVICE AND DRIVE
PROCÉDÉ DE DÉTERMINATION D'UNE CONTRAINTE D'UN PALIER, PRODUIT-PROGRAMME INFORMATIQUE, DISPOSITIF DE COMMANDE ET ENTRAÎNEMENT

(43) Veröffentlichungstag der Anmeldung: 30.10.2019
(73) Patentinhaber: Siemens Aktiengesellschaft, 80333 München (DE)
(72) Erfinder: Bormann, Ulf, 90518 Altdorf (DE); Klos, Hans-Henning, 91249 Weigendorf (DE); Scheibner, Dirk, 90473 Nürnberg (DE); Schimmer, Jürgen, 90473 Nürnberg (DE); Zettner, Jürgen, 90587 Veitsbronn (DE)

(56) Entgegenhaltungen:
- DE-A1-102004 014 452
- KR-A- 20160 134 372
- US-A- 5 587 635
- US-B1- 6 349 252

## Beschreibung

Die Erfindung betrifft ein Verfahren zur Bestimmung einer Belastung eines Lagers, ein Computerprogrammprodukt, eine Steuereinrichtung und einen Antrieb.

Elektrische Maschinen weisen in der Regel ein oder mehrere Lager oder Gleitlager auf. Lager und Gleitlager werden hier der Einfachheit halber mit Lager bezeichnet. Die Lager müssen in regelmäßigen zeitlichen Abständen mit Schmierstoff geschmiert werden. Das Lager dient zur Lagerung des Rotors in einem Stator. Vorzugsweise weist eine elektrische Maschine zumindest zwei Lager auf. Die Lager werden durch in ähnlicher Weise und mit ähnlichem Anspruch belastet. Nach einer vorgegebenen Laufzeit sind Lager mit einem Schmierstoff zu versehen. Der zeitliche Abstand zwischen Schmiervorgängen hängt im Wesentlichen von der Belastung des Lagers der elektrischen Maschine ab.

Ein wesentlicher Beitrag zur Belastung des Lagers ist eine Drehbeschleunigung des Rotors der elektrischen Maschine. Ein weiterer Beitrag ist die Drehzahl, mit welcher sich der Rotor der elektrischen Maschine dreht. Besonders stark belastet sind Lager von elektrischen Maschinen, die regelmäßig stark beschleunigt werden oder mit einer besonders niedrigen bzw. besonders hohen Drehzahl betrieben werden.

Nachteilhaft ist die Belastung von Lagern in elektrischen Maschinen schwierig zu bestimmen. Dies gilt insbesondere für Lager in elektrischen Maschinen, die mit stark wechselnden Drehzahlen betrieben werden. Durch die mangelnde Kenntnis der Belastung des jeweiligen Lagers kann auch eine voraussichtliche Restlebensdauer des Lagers und somit der elektrischen Maschine schwer abgeschätzt werden. Die Folge sind häufigere Wartungsarbeiten, insbesondere ein häufiger erfolgendes nachschmieren des jeweiligen Lagers, als in der Regel notwendig. Das Problem wurde bisher vor allem mit Schmierstoffkammern gelöst, welche der jeweiligen Lager der elektrischen Maschine zugeordnet sind. Nachteilhaft führt jedoch eine übermäßige Schmierstoffzuführung zur thermischen Überlastung des Lagers und somit zum Ausfall der elektrischen Maschine.

DE 20 2008 060 762 A1 offenbart diesbezüglich ein Verfahren und eine Vorrichtung zum Ermitteln einer dynamischen Lebensdauer von Wälzlagern. Hierbei wird die Frequenz eines Körperschalls bestimmt, um den Zustand und damit die dynamische Lebensdauer festzustellen. Nachteilhaft ermittelt ein Körperschallsensor lediglich eine Schädigung des Lagers.

US 2017/0126151 A1 beansprucht darüber hinaus ein ähnliches Verfahren zur Feststellung der Belastung einer elektrischen Maschine.

US5587635 offenbart ein Verfahren zur Bestimmung der Belastung eines Lagers, bei dem eine gewichtete Summe gebildet wird.

Bei diesem Verfahren nach wird das Drehmoment aus der Drehgeschwindigkeit und der Drehbeschleunigung bestimmt. Danach wird der jeweils aktuelle Wert mit einem zuvor gespeicherten Wert gemittelt. Die Belastung ergibt sich schließlich aus einer gewichteten Summe der Drehzahlen und dem gemittelten Drehmoment.

US6349252 offenbart ein Verfahren zur Bestimmung der Belastung eines Diesel-Motors, bei dem eine Matrix aufgestellt wird, und danach eine gewichtete Summe über die Matrix gebildet wird. Bei diesem Verfahren sind die Matrixelemente jeweils einer Drehzahl und einem Drehmoment zugeordnet.

Es ist demnach Aufgabe der Erfindung eine verbesserte Ermittlung der Belastung eines Lagers einer elektrischen Maschine zu ermöglichen.

Die Aufgabe wird durch ein Verfahren nach Anspruch 1 gelöst. Darüber hinaus wird die Aufgabe durch ein Computerprogrammprodukt nach Anspruch 12, durch eine Steuereinrichtung nach Anspruch 13 und durch einen Antrieb nach Anspruch 14 gelöst. Das Verfahren zur Bestimmung einer Belastung eines Lagers einer elektrischen Maschine weist die folgenden Verfahrensschritte auf:
- Bereitstellen einer Matrix M, wobei die Matrix Matrixelemente M_ij umfasst, wobei das jeweilige Matrixelement einem Bereich a_j einer Drehbeschleunigung a und einem Bereich v_i einer Drehzahl v zugeordnet ist;
- Bestimmung der Drehzahl und der Drehbeschleunigung eines Rotors der elektrischen Maschine, wobei der Rotor dem jeweiligen Lager zugeordnet ist;
- Addition einer Elementargröße x, beispielhaft x=1, zu dem jeweiligen Matrixelement der Matrix, wobei das jeweilige Matrixelement jeweils der Drehzahl und der Drehbeschleunigung zugeordnet ist;
- Bestimmen einer Belastung des Lagers als Summe, insbesondere als gewichtete Summe, der Matrixelemente der Matrix.

Vorzugsweise erfolgt ein Anzeigen der Belastung des jeweiligen Lagers mit Hilfe einer Anzeige.

Das Lager ist vorzugsweise als Wälzlager oder als Gleitlager ausgeführt.

Vorzugsweise wird die Belastung mit einer zulässigen Belastung des jeweiligen Lagers verglichen und berechnet, wann die zulässige Belastung erreicht sein wird.

Entsprechend der Differenz der Belastung und der zulässigen Belastung erfolgt vorzugsweise eine Abschätzung, wann eine Wartung des jeweiligen Lagers notwendig sein wird.

Hierdurch kann eine Wartung oder ein Austausch der Belastung entsprechend eingeplant werden.

Vorzugsweise erfolgt die Bildung der Summe nach jeder Addition der Elementargröße zu dem jeweiligen Matrixelement.

Ein der elektrischen Maschine zugeordnetes Lager ist ein Lager, welches eine Welle lagert, die von der jeweiligen elektrischen Maschine angetrieben wird. Ein Lager, das der elektrischen Maschine zugeordnet ist, kann auch das jeweilige Lager der elektrischen Maschine sein, das zur Lagerung des Rotors der elektrischen Maschine dient.

Die Bestimmung der Drehzahl v erfolgt vorzugsweise mit Hilfe eines Gebers an der elektrischen Maschine oder durch eine Analyse des Stroms oder der Spannung, welche von einer Stromquelle der elektrischen Maschine bereitgestellt wird. Alternativ oder zusätzlich kann die Drehzahl durch eine Analyse des elektrischen Feldes in der elektrischen Maschine oder durch eine Analyse der Vibration der elektrischen Maschine erfolgen.

Die Bestimmung der Drehbeschleunigung a des Rotors erfolgt vorzugsweise durch eine zeitliche Ableitung der Drehgeschwindigkeit a=dv/dt des Rotors oder durch die Analyse der Spannung oder des Stromes, welche der elektrischen Maschine bereitgestellt wird. Alternativ oder zusätzlich kann die Drehbeschleunigung auch direkt an der elektrischen Maschine gemessen werden.

Die Matrix umfasst Matrixelemente M_ij, wobei die Matrixelemente jeweils Drehzahlbereichen v_i und Drehbeschleunigungsbereichen a_j entsprechen.

Die Drehzahlbereiche und die Drehbeschleunigungsbereiche entsprechen beispielhaft bei einer 100x100-Matrix jeweils einem Prozent der maximalen Drehzahl v_max und der maximalen Drehbeschleunigung a_max.

Somit ergibt sich für den Bereich v_i der Drehzahl als untere Grenze (i-1)% bis i% der maximalen Drehzahl. Entsprechend ergibt sich für den Bereich der Drehbeschleunigung a_j als untere Grenze (i-1)% bis i% der maximalen Drehbeschleunigung. Hierbei gilt i=1,...,100. Mit anderen Worten gelten für den Bereich a_i: a_i=(a_i-1, a_i) und entsprechend für v_j: v_j=(v_j-1, v_j).

Die maximale Drehzahl ist vorzugsweise die maximale Drehzahl der elektrischen Maschine. Die maximale Drehbeschleunigung ist vorzugsweise die maximale Drehbeschleunigung der elektrischen Maschine.

Vorzugsweise werden die Drehgeschwindigkeit in den Spalten der Matrix und die Drehbeschleunigung in den Zeilen der Matrix angeordnet.

Der jeweilige Eintrag M_ij wird nach einer Zeiteinheit t jeweils um eine Elementargröße x, vorzugsweise 1, erhöht, insofern der Rotor mit einer Drehzahl v in dem jeweiligen Bereich v_i und einer Drehbeschleunigung a in dem jeweiligen Bereich a_j bewegt wird. $M _ ij \left(t+1\right) = M _ ij \left(t\right) + \left(\begin{matrix}x f ü r a ∈ a _ j und v ∈ v _ i \\ 0 sonst\end{matrix}\right)$

Somit wird zu jeder Zeiteinheit jeweils ein Matrixelement M_ij um die Elementargröße, vorzugsweise x=1, erhöht.

Anhand der Bildung einer gewichteten Summe S kann durch die Matrix M die Belastung der elektrischen Maschine jeweils nach Zeiteinheiten t bestimmt werden: $B \left(t\right) = {\sum }_{i , j} M _ ij \left(t\right) ⋅ f 1 \left(v_i\right) ⋅ f 2 \left(a_j\right)$

Die gewichtete Summe berücksichtigt den unterschiedlichen Einfluss unterschiedlicher Drehbeschleunigung bzw. unterschiedlicher Drehzahlen des Rotors der elektrischen Maschine auf die Belastung des Lagers. Für die gewichtete Summe wird ein erster Belastungsfaktor f1 berücksichtigt, wobei der erste Belastungsfaktor ein Maß für die Belastung der elektrischen Maschine bei einer Drehzahl v in einem bestimmten Bereich v_i darstellt. Weiter wird ein zweiter Belastungsfaktor f2 berücksichtigt, wobei der zweite Belastungsfaktor ein Maß für die Belastung der elektrischen Maschine bei einer Drehbeschleunigung in einem bestimmten Bereich a_j darstellt.

Möglich ist auch, die Gewichtung bei der Addition des jeweiligen Eintrages M_ij der Matrix M zu berücksichtigen. ${M}_{ij} \left(t+1\right) = M _ ij \left(t\right) + \left(\begin{matrix}f 1 ∗ f 2 : f 1 \left(v\right) f ü r v ∈ v _ i und f 2 \left(a\right) f ü r a ∈ a _ j \\ 0 : sonst\end{matrix}\right)$

Die Belastung B der elektrischen Maschine ist jeweils vorteilhaft proportional der Matrixsumme S. Die Zeiteinheiten t sind dabei natürliche Zahlen. $B \left(t\right) = {\sum }_{i , j} {M}_{ij} \left(t\right)$

Anhand der Belastung B kann die voraussichtliche Restlebensdauer der elektrischen Maschine, insbesondere des Lagers der elektrischen Maschine, bestimmt werden. Die voraussichtliche Restlebensdauer des jeweiligen Lagers entspricht der Differenz zwischen einer maximalen Gesamtlebensdauer für eine entsprechende Belastung und der Betriebszeit des jeweiligen Lagers. Vorzugsweise wird die voraussichtliche Restlebensdauer des jeweiligen Lagers an der elektrischen Maschine mit einer Anzeige angezeigt. Vorteilhaft kann so ein Austausch oder eine Wartung des jeweiligen Lagers terminiert werden.

Die Anzeige ist hierbei vorzugsweise der Spannungsquelle der elektrischen Maschine, oder der elektrischen Maschine selbst, zugeordnet.

In einer einfachen Ausgestaltung kann die Anzeige aus einer LED bestehen, die bei einer anstehenden Wartung die Farbe ändert. Vorteilhaft kann die Anzeige auch die Form einer Ampel annehmen.

Durch die Erfindung kann ohne Schwierigkeiten ein Maß für die (bisherige) Belastung eines Lagers einer elektrischen Maschine bestimmt und angezeigt werden. So kann besonders vorteilhaft auf einen Blick erkannt werden, ob bzw. wann eine anstehende Wartung, insbesondere ein Nachschmieren, in nächster Zeit erfolgen sollte.

In einer vorteilhaften Ausgestaltung der Erfindung erfolgt die Gewichtung der Summe mit einem ersten Belastungsfaktor bezüglich der Drehzahl oder einem Bereich für die Drehzahl, und mit einem zweiten Belastungsfaktor bezüglich der Drehbeschleunigung oder einem Bereich für die Drehbeschleunigung.

Vorteilhaft hängen die Belastungsfaktoren f1, f2 jeweils voneinander ab. Vorteilhaft berücksichtigt der erste Belastungsfaktor die Belastung in Abhängigkeit der Drehzahl bei einer jeweils zugeordneten Drehbeschleunigung. Weiter vorteilhaft berücksichtigt der zweite Belastungsfaktor die Belastung in Abhängigkeit der Drehbeschleunigung bei einer jeweils zugeordneten Drehzahl.

Gegebenenfalls kann ein Belastungsfaktors sowohl von der Drehzahl und von der Drehbeschleunigung abhängen.

Der erste Belastungsfaktor hängt vorteilhaft von der Drehzahl der elektrischen Maschine ab. Der zweite Belastungsfaktor hängt vorteilhaft von der Drehbeschleunigung der elektrischen Maschine ab. Durch die Verknüpfung der jeweiligen Belastungsfaktoren mit dem jeweiligen Matrixeintrag $M _ ij - > f 1 \left(v_i\right) * M _ ij * f 2 \left(a_j\right)$für alle t wird der jeweilige Matrixeintrag unmittelbar mit der Belastung verknüpft. Die Summe S ist demnach die Summe der Einträge M_ij der Matrix. Durch die Belastungsfaktoren f1, f2 ist die Matrixsumme mit der Belastung verknüpft. $s = {\sum }_{i , j} M _ ij \to B = {\sum }_{i , j} f 1 \left(v_i\right) ⋅ M _ ij ⋅ f 2 \left(a_j\right)$

Durch die Verknüpfung der Matrixelemente mit den Belastungsfaktoren ist vorteilhaft die Belastung der elektrischen Maschine unmittelbar durch die Summe der Matrixelemente ermittelbar.

Bei der Verwendung von einander unabhängigen Belastungsfaktoren f1, f2 können anstelle einer Matrix M die Werte für die Drehbeschleunigung und/oder für die Drehzahl in jeweils einer Liste hinterlegt werden. Anhand der jeweiligen Listen kann eine Bestimmung der Belastung des Lagers vereinfacht erfolgen. Hierzu wird der jeweilige Drehzahl-Wert mit dem ersten Belastungsfaktor multipliziert. Weiter wird der jeweilige Drehbeschleunigungswert mit dem zweiten Belastungsfaktor multipliziert. Die Summe aus den Produkten entspricht der Belastung des Lagers.

Durch die separate Betrachtung der Einflüsse auf das Lager durch Drehbeschleunigung und/oder Drehzahl des Rotors erfolgt eine besonders einfache Bestimmung der Belastung des Lagers der elektrischen Maschine.

Durch die Möglichkeit der Hinterlegung der Drehzahlwerte und/oder Drehbeschleunigungswerte in Listen kann vorteilhaft Speicherkapazität und Rechenkapazität eingespart werden.

Einer weiteren Modifikation bedarf es vorteilhaft nicht.

Bei einer weiteren Ausgestaltung der Erfindung ist der erste Belastungsfaktor f1 bereichsweise eine lineare Funktion der Drehzahl und der zweite Belastungsfaktor f2 eine quadratische Form der Drehbeschleunigung.

Anhand einer Analyse bezüglich des Einflusses der Drehzahl und der Drehbeschleunigung des Rotors auf die Lebensdauer des Lagers, konnte ermittelt werden, dass die Belastung der elektrischen Maschine mit steigender Drehzahl linear zunimmt. Weiter konnte ermittelt werden, dass die Belastung der elektrischen Maschine quadratisch mit steigender Drehbeschleunigung zunimmt. Schließlich steigt die Belastung des Lagers bei geringen Drehzahlen (1...20 U/min) stark an.

Es wurde weiter ermittelt, dass sich die Restlebensdauer des Lagers einer elektrischen Maschine umgekehrt proportional zur Drehzahl der elektrischen Maschine verhält.

Durch die Wahl solcher Belastungsfaktoren können eine Bestimmung der Belastung des jeweiligen Lagers und damit die Bestimmung einer voraussichtlichen Restlebensdauer des jeweiligen Lagers besonders einfach erfolgen.

Bei einer weiteren vorteilhaften Ausgestaltung werden die Verfahrensschritte nach jeweils einer Zeiteinheit wiederholt.

Vorzugsweise erfolgt nach jeweils einer Zeiteinheit, beispielsweise nach jeweils einer Sekunde, ein neuer Eintrag in die Matrix. Der neue Eintrag wird zu dem jeweiligen Matrixelement addiert, entsprechend der Drehzahl und der Drehbeschleunigung des Rotors während der Zeiteinheit.

Durch die fortwährende Ausführung der Verfahrensschritte kann die Belastung vorteilhaft während der gesamten Laufzeit der elektrischen Maschine bzw. des Lagers bestimmt werden.

Es ist jedoch je nach Wahl der Zeiteinheit zu beachten, dass der jeweilige Speicher bzw. die jeweilige Klassifizierung des jeweiligen Eintrages für den voraussichtlichen Wertebereich der Einträge der Matrix ausreicht.

Bei einer weiteren vorteilhaften Ausgestaltung der Erfindung wird die Matrix jeweils, insbesondere nach der Zeiteinheit, auf einen Einheitswert normiert.

Vorzugsweise wird die Summe der Matrixelemente auf 1 normiert. Eine solche Normierung erfolgt vorteilhaft, indem der jeweilige Matrixeintrag durch die Summe der Matrixelemente dividiert wird. Eine Normierung kann auch durch die Anzahl der bisher durchlaufenen Zeiteinheiten erfolgen.

Zur Einsparung von Rechenzeit kann eine Normierung alle 10, 100 oder 1000 Zeiteinheiten erfolgen.

Die Matrix wird vorzugsweise in einem Speicher hinterlegt. Durch eine, insbesondere fortlaufende Normierung kann der Speicher vorteilhaft klein gewählt werden. Insbesondere bei langen Laufzeiten der elektrischen Maschine ist eine solche Speicherung vorteilhaft.

Bei einer weiteren vorteilhaften Ausgestaltung der Erfindung erfolgt die Ermittlung der Drehzahl und der Drehbeschleunigung mit Hilfe der Spannungsversorgung, insbesondere des Frequenzumrichters.

Die Drehzahl erfolgt vorteilhaft durch die Bestimmung der Frequenz des Stromes bzw. der Spannung, die der elektrischen Maschine bereitgestellt wird. Die Bestimmung der Drehbeschleunigung erfolgt vorteilhaft durch die zeitliche Ableitung der Veränderung der Frequenz des Stroms, welcher der elektrischen Maschine bereitgestellt wird.

Durch die Bestimmung der Drehzahl und/oder der Drehbeschleunigung mit Hilfe der Stromversorgung der elektrischen Maschine kann vorteilhaft ein Geber an der elektrischen Maschine eingespart werden.

Bei einer weiteren vorteilhaften Ausgestaltung der Erfindung umfasst die Matrix Matrixelemente in Zeilen und Spalten, wobei in der jeweiligen Zeile die Drehzahlen in Drehzahlbereichen und in der jeweiligen Spalte die Drehbeschleunigungen in Drehbeschleunigungsbereichen angeordnet sind.

Diese Einteilung von Drehzahlbereichen und Drehbeschleunigungsbereichen in Zeilen und Spalten kann auch umgekehrt erfolgen. Optional kann eine Verknüpfung des jeweiligen Matrixelements mit einer Temperatur des Lagers, einer Feuchte der Umgebung des Lagers, oder einer Schwingung des Lagers erfolgen.

Die Anordnung der Drehzahlen in Drehzahlbereiche und der Drehbeschleunigungen in Drehbeschleunigungswerte erfolgt vorteilhaft linear ansteigend mit zunehmendem Index i, j der Spalte oder Zeile der Matrix. Vorzugsweise ist die Matrix mit gleicher Anzahl von Spalten und Zeilen ausgebildet. Hierdurch ist eine leichte Bearbeitung der Matrix möglich.

Vorzugsweise sind die Drehbeschleunigungswerte und/oder die Drehzahlwerte in jeweils äquidistanten Bereichen v_i, a_j angeordnet.

Alternativ können die Bereiche mit zunehmender Drehbeschleunigung und mit besonders kleiner Drehgeschwindigkeit kleiner ausgebildet sein als die anderen Bereiche.

Alternativ können jeweilige Bereiche unterschiedlich groß ausgeführt sein. Insbesondere Bereiche für Drehzahl und/oder Drehgeschwindigkeit, für die der jeweilige Belastungsfaktor nur eine geringe Abweichung zwischen den jeweiligen Bereichen zeigt, können vergrößert gewählt werden. Die Bereiche werden vorzugsweise in Abhängigkeit der ersten Ableitung des jeweiligen Belastungswerts nach der Drehzahl oder der Drehbeschleunigung gewählt.

Insbesondere eine Zusammenlegung von Bereichen zu einem Bereich dient der Vereinfachung der Berechnung der Belastung.

Durch die Einteilung der Bereiche für die jeweiligen Werte kann die Bestimmung der Belastung weiter verbessert werden.

Bei einer weiteren vorteilhaften Ausgestaltung der Erfindung sind die Drehzahlen und/oder die Drehzahlbereiche jeweils auf eine Maximaldrehzahl normiert und die Drehbeschleunigungen und/oder die Drehbeschleunigungsbereiche sind jeweils auf eine Maximaldrehbeschleunigung normiert.

Vorteilhaft sind die Maximaldrehzahl und/oder die Maximaldrehbeschleunigung durch die Spezifikation der elektrischen Maschine vorgegeben. Alternativ können die Maximaldrehzahl und/oder die Maximaldrehbeschleunigung in Bezug auf den jeweiligen Einsatzzweck der elektrischen Maschine normiert sein.

Durch die Normierung der jeweiligen Einträge kann vorteilhaft die Belastung der jeweiligen elektrischen Maschine mit der Belastung einer weiteren elektrischen Maschine verglichen werden.

Bei einer weiteren vorteilhaften Ausgestaltung der Erfindung wird zusätzlich eine Schwingung eines Lagers der elektrischen Maschine ermittelt, wobei die Schwingung in die Berechnung der Belastung des Lagers eingeht.

Die Belastung des Lagers, welche durch die Schwingung desselben hervorgerufen wird, wird vorzugsweis mit Hilfe eines dritten Belastungsfaktors ermittelt.

Die Schwingung wird vorteilhaft durch eine Messung mit einem Schwingungssensor, beispielhaft einem Körperschallsensor, ermittelt, wobei der Schwingungssensor im Bereich des jeweiligen Wälzlagers angeordnet ist. Eine Schwingung, die von/auf einem Wälzlager ausgeht oder wirkt, erhöht die Belastung des Lagers oder weist auf eine Schädigung des Lagers hin.

Je nach Frequenz der Schwingung ist auf eine bestimmte Art und Grad der Schädigung des jeweiligen Lagers zu schließen.

Es ist demnach vorteilhaft, die Matrix um eine weitere Dimension auf eine dreidimensionale Matrix zu erweitern. Als dritte Dimension wird vorteilhaft jeder Kombination von Drehgeschwindigkeit und Drehbeschleunigung eine Schwingung zugeordnet.

Zusätzlich oder alternativ können weitere Einflussgrößen auf die Lebensdauer des Lagers in jeweils einer Liste zusammengefasst werden. Eine solche Liste kann die Abhängigkeit der Feuchte in der Umgebung des Lagers oder eine Schwingung des Lagers als Funktion der Betriebsdauer der elektrischen Maschine erstellt werden. Anhand der Liste kann mit Hilfe eines entsprechenden Belastungsfaktors die Belastung des Lagers ermittelt werden. Die Belastung des Lagers in Abhängigkeit von Drehzahl, Drehmoment, Feuchte und/oder Schwingungen kann durch eine Summe der jeweiligen Belastungen ermittelt werden.

Möglich ist auch eine vierdimensionale Matrix, der jeder Kombination von Drehzahl und Drehbeschleunigung ein 2-Tupel von Schwingungsamplitude und Schwingungsfrequenz zugeordnet wird.

Durch die Betrachtung der Schwingung des Lagers der elektrischen Maschine wird vorzugsweise ein dritter Belastungsfaktor f3 eingeführt. Der dritte Belastungsfaktor dient zur Verbindung der Schwingung, insbesondere der Schwingungsfrequenz und/oder der Schwingungsamplitude, mit der Belastung des jeweiligen Lagers der elektrischen Maschine.

In Kombination der Schwingung, welche vorzugsweise nahe dem jeweiligen Lager bestimmt wird, kann die voraussichtliche Restlebensdauer genauer bestimmt werden. Insbesondere kann eine bereits vorhandene Schädigung der elektrischen Maschine und/oder des Lagers bei der Ermittlung der voraussichtlichen Restlebensdauer berücksichtigt werden.

Bei einer weiteren vorteilhaften Ausgestaltung der Erfindung wird die jeweilige Schwingung, insbesondere als Funktion der Zeit, angezeigt.

Angezeigt werden vorzugsweise die Frequenz und/oder die Amplitude der Schwingung. Die Anzeige erfolgt vorzugsweise als zeitlicher Verlauf der Amplitude und/oder der Frequenz der Schwingung.

Vorteilhaft erfolgt die Darstellung der Frequenzen (FourierTransformierten) der Schwingungen mittels der Anzeige.

Durch die Darstellung der Schwingung kann, insbesondere durch einen Vergleich mit der voraussichtlichen Restlebensdauer, anhand der Belastung der elektrischen Maschine die Richtigkeit der voraussichtlichen Restlebensdauer verbessert abgeschätzt werden.

Bei einer weiteren vorteilhaften Ausgestaltung der Erfindung wird anhand der Belastung eine voraussichtliche Restlebensdauer des Lagers, insbesondere des Lagers der elektrischen Maschine, angezeigt.

Anhand der Belastung des Lagers der elektrischen Maschine lässt sich durch einen Vergleich mit Erfahrungswerten bezüglich Lebensdauern von Lagern mit ähnlichem Einsatzspektrum die voraussichtliche Restlebensdauer abschätzen. Eine Abhängigkeit der voraussichtlichen Restlebensdauer von Belastung, die mit dem hier beschriebenen Verfahren ermittelt wurde, erfolgt vorzugsweise mit einem selbstlernenden Algorithmus.

Durch die unmittelbare Anzeige der voraussichtlichen Restlebensdauer der elektrischen Maschine und/oder des jeweiligen Lagers kann eine Wartung besonders einfach geplant werden ohne einen Ausfall der elektrischen Maschine zu riskieren.

Das Computerprogrammprodukt ist zum Ablauf auf einer Recheneinheit, insbesondere auf einer Recheneinheit einer Steuereinrichtung für eine elektrische Maschine ausgebildet, wobei das Computerprogrammprodukt bei Ablauf auf der Recheneinheit zur Durchführung des hier beschriebenen Verfahrens ausgebildet ist.

Das Computerprogrammprodukt weist eine Schnittstelle zur Bereitstellung der Drehzahl und optional der Drehbeschleunigung auf. Weiter weist das Computerprogrammprodukt vorteilhaft einen Eingang für die gemessenen Schwingungen auf. Vorzugsweise gibt das Computerprogrammprodukt die Belastung und/oder die voraussichtliche Restlebensdauer aus.

Vorteilhaft wird das Computerprogrammprodukt auf der Recheneinheit der Steuereinrichtung installiert. Zusätzlich kann das Computerprogramm auf einem zentralen Server installiert sein und durch Abruf von der Steuereinrichtung ausgeführt werden.

Das Computerprogrammprodukt ist dazu ausgebildet, anhand ihm bereitgestellten Drehzahlen (und optional Drehbeschleunigungen) eine Belastung eines Lagers zu berechnen. Die Berechnung erfolgt mittels des vorstehend beschrieben Verfahrens.

Beim Ablauf des Computerprogrammproduktes wird dieses vorzugsweise in den Arbeitsspeicher der Recheneinheit geladen und mit einem Prozessor (CPU) ausgeführt. Die berechnete Belastung und/oder die aus der Belastung ermittelte voraussichtliche Restlebensdauer werden vorzugsweise auf einer Anzeige, insbesondere einem Display, angezeigt.

Vorzugsweise ist das Computerprogrammprodukt dazu ausgebildet, eine Meldung auszugeben, falls ein Ausfall des jeweiligen Lagers droht.

Durch den Einsatz eines Computerprogrammproduktes ist eine besonders einfache Modifikation einer bestehenden Steuereinrichtung für eine elektrische Maschine möglich.

Die Steuereinrichtung weist eine Recheneinheit auf und ist einer Anzeige zugeordnet, wobei die Recheneinheit zur Durchführung des hier beschriebenen Verfahrens ausgebildet ist, wobei die Anzeige zur Darstellung der Belastung vorgesehen ist.

Die Steuereinrichtung ist vorzugsweise als Speicherprogrammierbare Steuerung (SPS) oder als Bewegungssteuerung, beispielhaft als SIMOTION D der Firma Siemens AG, ausgebildet. Alternativ kann auch eine Stromversorgung mit einer Recheneinheit ausgestattet sein, wobei die Recheneinheit zur Durchführung des hier beschriebenen Verfahrens ausgebildet ist. Die Anzeige kann in einer einfachen Ausgestaltung als zweifarbige LED ausgebildet sein, die bei drohendem Überschreiten einer maximal zulässigen Belastung oder bei einem Ablauf der voraussichtlichen Restlebensdauer die Farbe wechselt. Vorzugsweise erfolgt die Darstellung der Belastung bzw. der voraussichtlichen Restlebensdauer des jeweiligen Lagers analog einer Ampel, wobei ein gelbes Signal vorzugsweise die Notwendigkeit einer Nachschmierung andeutet.

Bei einer bereits vorhandenen Anzeige, insbesondere einem Display, kann die Anzeige der Belastung und/oder der voraussichtlichen Restlebensdauer auf der bereits vorhandenen Anzeige integriert werden.

Durch die Verwendung der Steuereinrichtung zur Durchführung des Verfahrens kann vorteilhaft eine bestehende Steuereinrichtung in ihrer Funktion erweitert werden.

Der Antrieb weist eine elektrische Maschine, eine Stromversorgung, insbesondere einen Frequenzumrichter, sowie eine vorstehend beschriebene Steuereinrichtung auf. Das Lager ist der elektrischen Maschine zugeordnet.

Der Antrieb ist vorzugsweise Teil einer industriellen Anlage oder eines elektrisch betriebenen Fahrzeugs.

Die elektrische Maschine wird bei dem Antrieb von der Stromversorgung mit Strom versorgt. Die Stromversorgung ist vorzugsweise als (Frequenz-)Umrichter ausgestaltet. Der elektrischen Maschine ist vorzugsweise ein Geber zugeordnet, der zur Ermittlung der Drehzahl ausgebildet ist. Alternativ oder zusätzlich kann die Drehzahl durch die Steuereinrichtung und/oder durch die Stromversorgung bereitgestellt werden. Vorzugsweise erfolgt die Anzeige der Belastung des jeweiligen Lagers oder der jeweiligen elektrischen Maschine auf einer Anzeige. Die Anzeige ist vorzugsweise einer der Antriebskomponenten, vorzugsweise der Stromquelle oder der elektrischen Maschine mit dem jeweiligen Lager zugeordnet.

Bei einer weiteren vorteilhaften Ausgestaltung der Erfindung sind die Belastung und/oder eine voraussichtliche Restlebensdauer auf einer Anzeige anzeigbar, wobei die Anzeige der elektrischen Maschine zugeordnet ist.

Vorzugsweise ist die Anzeige einer sogenannten Smart-Box oder einem sonstigen Anbauteil der elektrischen Maschine zugeordnet.

Im Folgenden wird die Erfindung anhand von Figuren näher beschrieben und erläutert. Die in den Figuren gezeigten Merkmale sind beispielhaft und schränken die Erfindung keinesfalls ein.

Es zeigen:
- FIG 1: eine schematische Darstellung des Verfahrens,
- FIG 2: eine Matrix und deren Einträge,
- FIG 3: eine 3D-Darstellung der Matrix, sowie
- FIG 4: ein Antrieb.

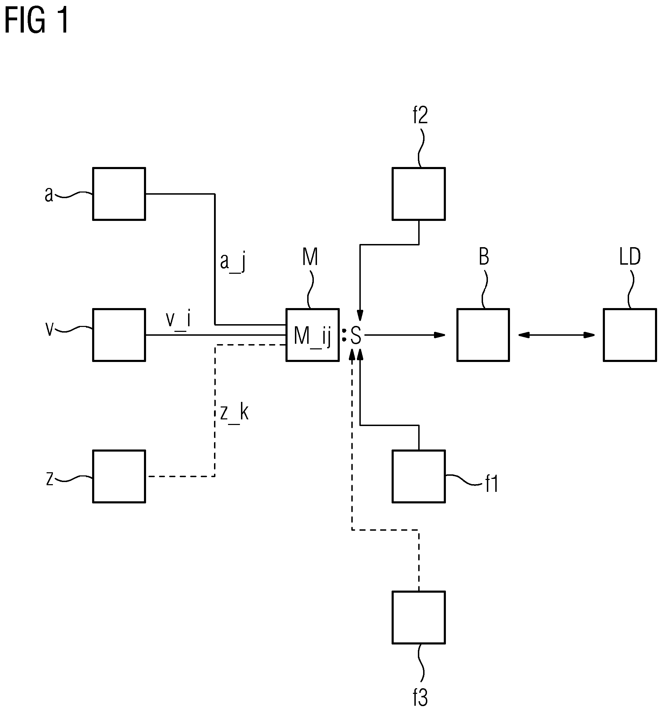

FIG 1 zeigt eine schematische Darstellung des Verfahrens. Bei dem Verfahren wird eine Drehbeschleunigung a und eine Drehgeschwindigkeit v eines Rotors einer elektrischen Maschine 1 ermittelt. Optional wird auch eine Schwingung z einer elektrischen Maschine 1 oder eines Lagers 3 einer elektrischen Maschine 1 ermittelt. Die Drehbeschleunigung a und die Drehgeschwindigkeit v und optional eine Schwingung z werden in Matrixelementen M_ij einer Matrix M eingetragen. Hierbei erfolgt der Eintrag in Bereiche v_i, a_j, z_k. Aus der Matrix M wird unter Berücksichtigung eines ersten Belastungsfaktors f1 und eines zweiten Belastungsfaktors f2 eine gewichtete Summe S berechnet. Der erste Belastungsfaktor f1 quantifiziert die Belastung des Lagers 3 entsprechend der Drehgeschwindigkeit v und der zweite Belastungsfaktor f2 quantifiziert die Belastung des Lagers 3 entsprechend der Drehbeschleunigung a. Die bezüglich der Belastungsfaktoren f1, f2 gewichtete Summe S entspricht der Belastung B des Lagers 3 der elektrischen Maschine 1. Optional kann auch ein dritter Belastungsfaktor f3 berücksichtigt werden, insofern die Schwingung z in der Matrix M als dritte Belastungsfunktion f3 Berücksichtigung findet. Die Belastung B des Lagers 3 ist umgekehrt proportional zur voraussichtlichen Restlebensdauer LD des jeweiligen Lagers 3.

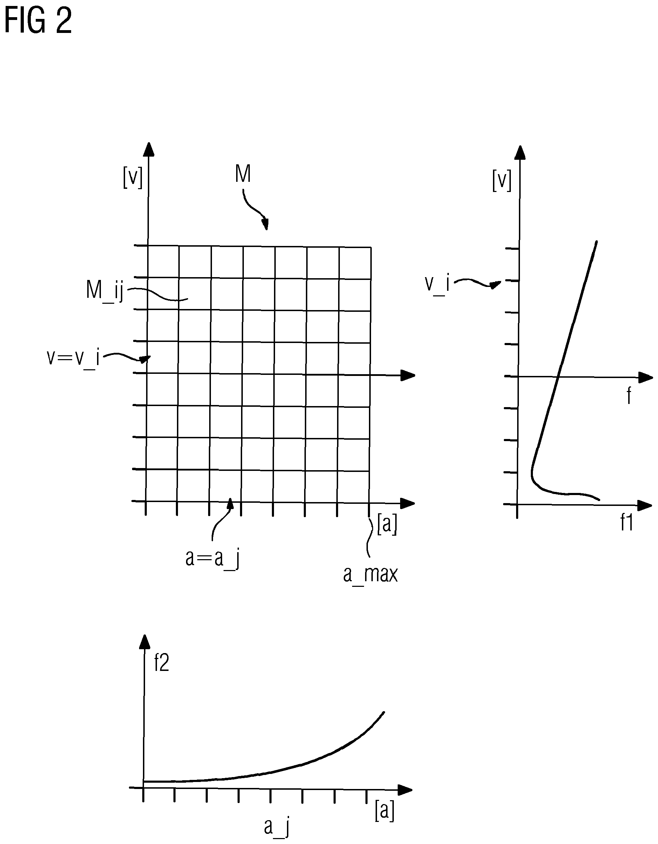

FIG 2 zeigt eine Matrix M und deren Einträge M_ij. Die Drehgeschwindigkeiten v und die Drehbeschleunigungen a werden jeweils in Matrixelemente M_ij der Matrix M eingetragen. Die Matrix M ist als Gitter der einzelnen Matrixelemente M_ij dargestellt, wobei das Gitter symbolisiert, dass die Kombination aus Drehbeschleunigung a und Drehgeschwindigkeit v in das jeweilige Matrixelement M_ij der Matrix M eingetragen werden. Weiter gezeigt sind die Abhängigkeit des ersten Belastungsfaktors f1 von der Drehgeschwindigkeit, wobei der erste Belastungsfaktor f1 einen linearen Anstieg mit der Drehgeschwindigkeit v zeigt. Zudem zeigt der Verlauf des ersten Belastungsfaktors 1 für geringe Drehzahlen einen starken Anstieg des ersten Belastungsfaktors f1. Weiter die Abhängigkeit ????? des zweiten Belastungsfaktors f2 von der Drehbeschleunigung a dargestellt, wobei der zweite Belastungsfaktor f2 einen quadratischen Anstieg mit der Drehbeschleunigung a zeigt.

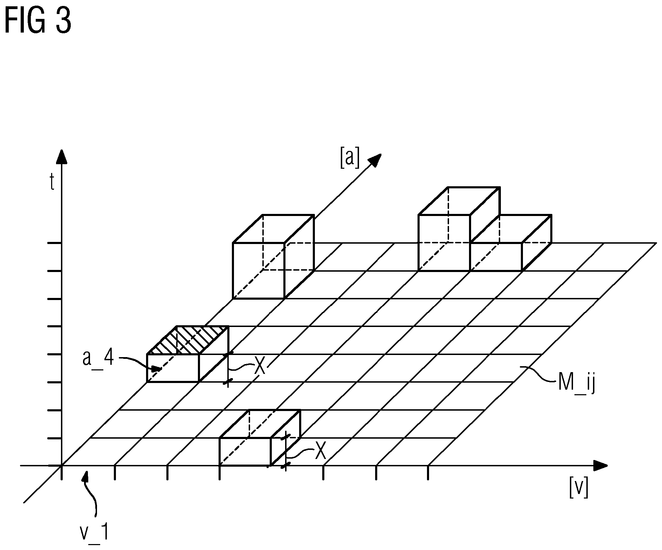

FIG 3 zeigt eine 3D-Darstellung der Matrix M, wobei die Matrix M auf ihrer Grundfläche die Einträge M_ij als Quadrate symbolisiert anzeigt. Auf der nach oben zeigenden Achse sind die einzelnen Zeiteinheiten t dargestellt. Wenn eine elektrische Maschine 1 für eine Zeiteinheit t mit einer bestimmten Drehgeschwindigkeit v und einer bestimmten Drehbeschleunigung a betrieben wird, dann wird nach Ablauf der jeweiligen Zeiteinheit t das Matrixelement M_ij der Matrix M um den Wert einer Elementargröße x erhöht. Die Erhöhung des jeweiligen Matrixelements M_ij ist hierbei durch Kästchen symbolisiert, die anzeigen, wie viele Zeiteinheiten t die elektrische Maschine in einem Bereich v_i der Drehgeschwindigkeit v und in einem Bereich a_j der Drehbeschleunigung a verharrt ist. Die Belastung B entspricht der gewichteten Summe S über die Matrixelemente M_ij. Die Höhe der Kästchen kann vorteilhaft durch eine Multiplikation mit den entsprechenden Belastungsfaktoren f1, f2 modifiziert sein, so dass die Gewichtung in den jeweiligen Wert des jeweiligen Matrixelements M_ij eingeht. Herausgehoben ist weiter das schraffierte Kästchen, wobei das schraffierte Kästchen dem Matrixelement M_14 (i=4; j=1) entspricht. Das Kästchen zeigt an, dass die elektrische Maschine 1 eine Zeiteinheit t in einem Geschwindigkeitsbereich v_1 und in einem Drehbeschleunigungsbereich a_4 bewegt worden ist.

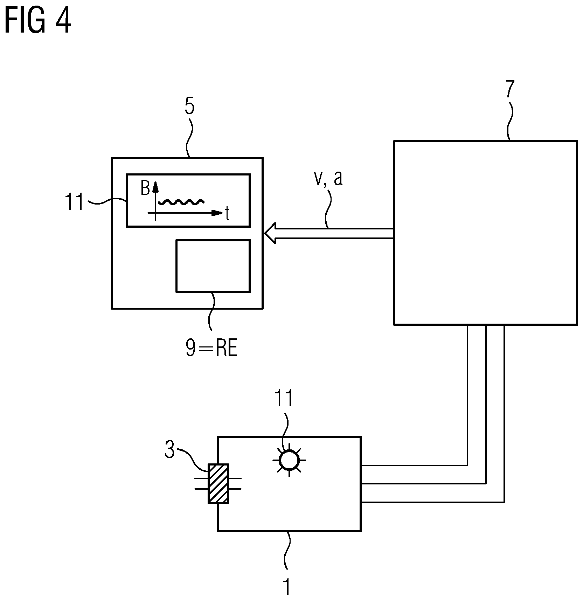

FIG 4 zeigt einen Antrieb. Der Antrieb umfasst eine elektrische Maschine 1, eine Stromversorgung 7 und eine Steuereinrichtung 5. Die Stromversorgung 7 ist vorteilhaft als (Frequenz-)Umrichter ausgebildet. Die Stromversorgung 7 stellt einen Strom für die elektrische Maschine 1 bereit. Die elektrische Maschine 1 umfasst zumindest ein Lager 3, wobei das Lager 3 den Rotor der elektrischen Maschine (nicht gezeigt) drehbar lagert.

Die Steuereinrichtung 5 umfasst eine Recheneinheit 9 und eine Anzeige 11. Die Anzeige 11 dient zur Anzeige der Belastung B des Lagers. Die Belastung wird vorteilhaft als Funktion der Zeit t dargestellt. Die Stromversorgung 7 stellt überdies die Drehgeschwindigkeit v und die Drehbeschleunigung a der Steuereinrichtung 5 bereit. Eine solche Bereitstellung erfolgt vorzugsweise zu jeder Zeiteinheit t.

Zusammenfassend betrifft die Erfindung ein Verfahren zur Bestimmung einer Belastung eines Lagers 3, einer Steuereinrichtung 5, eines Computerprogrammprodukts und eines Antriebs. Zur Bestimmung der Belastung des Lagers 3 wird fortwährend, vorteilhaft nach jeder Zeiteinheit t, die Drehzahl v und die Drehbeschleunigung a eines Rotors einer elektrischen Maschine 1 ermittelt, wobei der Rotor dem Lager 3 zugeordnet ist. Die ermittelten Drehzahlen v und Drehbeschleunigungen a werden jeweils in Bereichen v_i, a_j eingeteilt und entsprechend der Einteilung werden Matrixelemente M_ij einer Matrix M jeweils nach der Zeiteinheit t mit einer Elementargröße x addiert. So bildet die Matrix M eine Darstellung der Betriebszeit des Lagers 3 und der zeitlichen Betriebsdauern in Bezug auf Drehzahlen v und Drehbeschleunigungen a. Die Belastung B des Lagers 3 wird durch eine gewichtete Summe S der Matrixelemente M_ij berechnet. Den Einfluss von Drehzahl v und Drehbeschleunigung a auf die Belastung B des Lagers 3 erfolgt jeweils durch Belastungsfaktoren f1, f2, f3. Vorteilhaft wird die Belastung B auf einer Anzeige 11 angezeigt.

## Patentansprüche

1. Verfahren zur Bestimmung einer Belastung (B) eines Lagers, insbesondere eines Lagers (3) einer elektrischen Maschine (1), aufweisend die folgenden Verfahrensschritte:
- Bereitstellen einer Matrix (M), wobei die Matrix (M) Matrixelemente (M_ij) umfasst, wobei das jeweilige Matrixelement (M_ij) einem Bereich (a_j) einer Drehbeschleunigung (a) und einem Bereich (v_i) einer Drehzahl (v) zugeordnet ist;
- Bestimmung der Drehzahl (v) und der Drehbeschleunigung (a) eines Rotors der elektrischen Maschine (1), wobei der Rotor dem jeweiligen Lager zugeordnet ist,
- Addition einer Elementargröße (x) zu jeweils einem Matrixelement (M_ij) der Matrix (M), wobei das jeweilige Matrixelement (M_ij) jeweils der Drehzahl (v) und der Drehbeschleunigung (a) zugeordnet ist,
- Bestimmen der Belastung (B) als gewichtete Summe (S) der Matrixelemente (M_ij) der Matrix (M).

2. Verfahren nach Anspruch 1, wobei die Gewichtung der Summe (S) mit einem ersten Belastungsfaktor (f1) bezüglich der Drehzahl (v) oder einem Bereich (v_i) für die Drehzahl (v) erfolgt und mit einem zweiten Belastungsfaktor (f2) bezüglich der Drehbeschleunigung oder einem Bereich (a_j) für die Drehbeschleunigung (a) erfolgt.

3. Verfahren nach Anspruch 2, wobei der erste Belastungsfaktor (f1) bereichsweise eine lineare Funktion der Drehzahl (a) ist, wobei der zweite Belastungsfaktor (f2) eine quadratische Form der Drehbeschleunigung (a) ist.

4. Verfahren nach einem der Ansprüche 1 bis 3, wobei die Verfahrensschritte nach jeweils einer Zeiteinheit (t) wiederholt werden.

5. Verfahren nach einem der vorangehenden Ansprüche, wobei die Matrix (M) jeweils, insbesondere nach der Zeiteinheit (t), auf einen Einheitswert (E) normiert wird.

6. Verfahren einem der vorangehenden Ansprüche, wobei die Ermittlung der Drehzahl (v) und der Drehbeschleunigung (a) mit Hilfe der Spannungsversorgung (7), insbesondere des Frequenzumrichters, erfolgt.

7. Verfahren nach einem der vorangehenden Ansprüche, wobei die Matrix (M) Matrixelemente (M_ij) in Zeilen und Spalten umfasst, wobei in der jeweiligen Zeile die Drehzahlen (v) in Drehzahlbereiche (v_i) und in der jeweiligen Spalte die Drehbeschleunigungen (a) in Drehbeschleunigungsbereichen (a_j) angeordnet sind.

8. Verfahren nach Anspruch 7, wobei die Drehzahlen (v) und/oder die Drehzahlbereiche (v_i) jeweils auf eine Maximaldrehzahl (v_max) normiert sind, wobei die Drehbeschleunigungen und/oder die Drehbeschleunigungsbereiche (a_j) jeweils auf eine Maximaldrehbeschleunigung (a_max) normiert sind.

9. Verfahren nach einem der vorangehenden Ansprüche, wobei zusätzlich eine Schwingung (z) eines Lagers der elektrischen Maschine ermittelt wird, wobei die jeweilige Schwingung (z) in die Berechnung der Belastung (B) eingeht, insbesondere in Verknüpfung mit einem dritten Belastungsfaktor (f3).

10. Verfahren nach Anspruch 9, wobei die jeweilige Schwingung (z), insbesondere als Funktion der Zeit (t), angezeigt wird.

11. Verfahren nach einem der vorangehenden Ansprüche, wobei anhand der Belastung (B) eine voraussichtliche Restlebensdauer (LD) des Lagers (3), insbesondere dem Lager der elektrischen Maschine (1), angezeigt wird.

12. Computerprogrammprodukt zum Ablauf auf einer Recheneinheit, insbesondere auf einer Recheneinheit (9) einer Steuereinrichtung für eine elektrische Maschine (1), wobei das Computerprogrammprodukt bei Ablauf auf der Recheneinheit (9) zur Durchführung eines Verfahrens nach einem der vorangehenden Ansprüche ausgebildet ist.

13. Steuereinrichtung (5), aufweisend eine Recheneinheit (9) und vorzugsweise eine Anzeige (11), wobei die Recheneinheit (9) zur Durchführung des Verfahrens nach einem der Ansprüche 1 bis 11 ausgebildet ist, wobei die Anzeige (11) zur Darstellung der Belastung (B) vorgesehen ist.

14. Antrieb, aufweisend eine elektrische Maschine (1), eine Stromversorgung (7), insbesondere einen Frequenzumrichter, und eine Steuereinrichtung (5) nach Anspruch 13.

15. Antrieb nach Anspruch 14, wobei die Belastung (B) und/oder eine voraussichtliche Restlebensdauer auf einer Anzeige (11) anzeigbar sind, wobei die Anzeige (11) der elektrischen Maschine (1) zugeordnet ist.

## Claims

1. Method for determining a loading (B) of a bearing, in particular of a bearing (3) of an electrical machine (1), having the following method steps:
- Providing a matrix (M), wherein the matrix (M) comprises matrix elements (M_ij), wherein the respective matrix element (M_ij) is assigned to a range (a_j) of an angular acceleration (a) and to a range (v_i) of a rotational speed (v);
- Determining the rotational speed (v) and the angular acceleration (a) of a rotor of the electrical machine (1), wherein the rotor is assigned to the respective bearing;
- Adding an elementary variable (x) to a matrix element (M_ij) of the matrix (M) in each case, wherein the respective matrix element (M_ij) is assigned to the rotational speed (v) and the angular acceleration (a) in each case;
- Determining the loading (B) as a weighted sum (S) of the matrix elements (M_ij) of the matrix (M).

2. Method according to claim 1, wherein the sum (S) is weighted by a first loading factor (f1) relating to the rotational speed (v) or a range (v_i) for the rotational speed (v), and by a second loading factor (f2) relating to the angular acceleration or a range (a_j) for the angular acceleration (a).

3. Method according to claim 2, wherein, in certain ranges, the first loading factor (f1) is a linear function of the rotational speed (a), wherein the second loading factor (f2) is a quadratic form of the angular acceleration (a).

4. Method according to one of claims 1 to 3, wherein the method steps are repeated after a time unit (t) in each case.

5. Method according to one of the preceding claims, wherein the matrix (M) is normalised to one unit value (E) in each case, in particular after the time unit (t).

6. Method according to one of the preceding claims, wherein the ascertaining of the rotational speed (v) and the angular acceleration (a) takes place with the aid of the voltage supply (7), in particular the frequency converter.

7. Method according to one of the preceding claims, wherein the matrix (M) comprises matrix elements (M_ij) in rows and columns, wherein the rotational speeds (v) are arranged in the respective rows in rotational speed ranges (v_i) and the angular accelerations (a) are arranged in the respective columns in angular acceleration ranges (a_j).

8. Method according to claim 7, wherein the rotational speeds (v) and/or the rotational speed ranges (v_i) are normalised to a maximum rotational speed (v_max) in each case, wherein the angular accelerations and/or the angular acceleration ranges (a_j) are normalised to a maximum angular acceleration (a_max) in each case.

9. Method according to one of the preceding claims, wherein an oscillation (z) of a bearing of the electrical machine is additionally ascertained, wherein the respective oscillation (z) is included in the calculation of the loading (B), in particular in connection with a third loading factor (f3).

10. Method according to claim 9, wherein the respective oscillation (z) is indicated, in particular as a function of the time (t).

11. Method according to one of the preceding claims, wherein an anticipated remaining operational life (LD) of the bearing (3), in particular the bearing of the electrical machine (1), is indicated on the basis of the loading (B).

12. Computer program product for running on a computing unit, in particular on a computing unit (9) of a control facility for an electrical machine (1), wherein the computer program product is embodied to perform a method according to one of the preceding claims when run on the computing unit (9).

13. Control facility (5), having a computing unit (9) and preferably a display (11), wherein the computing unit (9) is embodied to perform the method according to one of claims 1 to 11, wherein the display (11) is provided to represent the loading (B).

14. Drive, having an electrical machine (1), a current supply (7), in particular a frequency converter, and a control facility (5) according to claim 13.

15. Drive according to claim 14, wherein the loading (B) and/or an anticipated remaining operational life are able to be displayed on a display (11), wherein the display (11) is assigned to the electrical machine (1).

## Revendications

1. Procédé de détermination de la charge (B) d'un palier, notamment d'un palier (3) d'une machine (1) électrique, comportant les stades de procédé suivant :
- on se procure une matrice (M), la matrice (M) comprenant des éléments (M_ij) de matrice, l'élément (M_ij) de matrice respectif étant associé à une plage (a_j) d'une accélération (a) en rotation et à une plage (v_i) d'une vitesse (v) de rotation ;
- on détermine la vitesse (v) de rotation et l'accélération (a) en rotation d'un rotor de la machine (1) électrique, le rotor étant associé au palier respectif,
- on additionne une grandeur (x) élémentaire à, respectivement, un élément (M_ij) de matrice de la matrice (M), l'élément (M_ij) de matrice respectif étant associé, respectivement, à la vitesse (v) de rotation et à l'accélération (a) en rotation,
- on détermine la charge (B) comme somme (S) pondérée des éléments (M_ij) de matrice de la matrice (M).

2. Procédé suivant la revendication 1, dans lequel la pondération de la somme (S) s'effectue avec un premier facteur (f1) de charge, rapporté à la vitesse (v) de rotation ou à une plage (v_i) de la vitesse (v) de rotation, et avec un deuxième facteur (f2) de charge, rapporté à l'accélération en rotation ou à une plage (a_j) de l'accélération (a) en rotation.

3. Procédé suivant la revendication 2, dans lequel le premier facteur (f1) de charge est, endroit par endroit, une fonction linéaire de la vitesse (a) de rotation, le deuxième facteur (f2) de charge étant une forme quadratique de l'accélération (a) en rotation.

4. Procédé suivant l'une des revendications 1 à 3, dans lequel on répète les stades du procédé après, respectivement, une unité (t) de temps.

5. Procédé suivant l'une des revendications précédentes, dans lequel on norme la matrice (M), respectivement, notamment suivant l'unité (t) de temps, sur une valeur (E) unitaire.

6. Procédé suivant l'une des revendications précédentes, dans lequel la détermination de la vitesse (v) de rotation et de l'accélération (a) en rotation s'effectue à l'aide de l'alimentation (7) en tension, notamment du convertisseur de fréquence.

7. Procédé suivant l'une des revendications précédentes, dans lequel la matrice (M) comprend des élément (M_ij) de matrice en lignes et en colonnes, dans lequel, dans les lignes respectives, les vitesses (v) de rotation sont portées en plages (v_i) de vitesse de rotation et, dans les colonnes respectives, les accélérations (a) en rotation sont portées en plages (a_j) d'accélération en rotation.

8. Procédé suivant la revendication 7, dans lequel les vitesses (v) de rotation et/ou les plages (v_i) de vitesse de rotation sont normées, respectivement, sur une vitesse (v_max) de rotation maximum, les accélérations en rotation et/ou les plages (a_j) d'accélération en rotation étant normées, respectivement, sur une accélération (a_max) en rotation maximum.

9. Procédé suivant l'une des revendications précédentes, dans lequel on détermine, en outre, une vibration (z) d'un palier de la machine électrique, la vibration (z) respective entrant dans le calcul de la charge (B), notamment en combinaison avec un troisième facteur (f3) de charge.

10. Procédé suivant la revendication 9, dans lequel on affiche la vibration (z) respective, notamment en fonction du temps (t).

11. Procédé suivant l'une des revendications précédentes, dans lequel on affiche, à l'aide de la charge (B), une durée (LD) de vie restante prévisible du palier (3), notamment au palier de la machine (1) électrique.

12. Produit de programme d'ordinateur à dérouler sur une unité informatique, notamment sur une unité (9) informatique d'un dispositif de commande d'une machine (1) électrique, le produit de programme d'ordinateur étant constitué pour, lorsqu'il se déroule sur l'unité (9) informatique, effectuer un procédé suivant l'une des revendications précédentes.

13. Dispositif (5) de commande ayant une unité (9) informatique et de préférence un affichage (11), l'unité (9) informatique étant constituée pour effectuer le procédé suivant l'une des revendications 1 à 11, l'affichage (11) étant prévu pour représenter la charge (B).

14. Entraînement, comportant une machine (1) électrique, une alimentation (7) en courant, notamment un convertisseur de fréquence, et un dispositif (5) de commande suivant la revendication 13.

15. Entraînement suivant la revendication (14), dans lequel la charge (B) et/ou la durée de vie restant prévisible pouvant être indiquée sur un affichage (11), l'affichage (11) étant associé à la machine (1) électrique.
